# EUROPÄISCHE PATENTSCHRIFT

(11) **EP 0 835 000 B1**
(45) Veröffentlichungstag und Bekanntmachung des Hinweises auf die Patenterteilung: **31.03.1999**
(21) Anmeldenummer: 97108286.2
(22) Anmeldetag: 22.05.1997
(51) Int. Cl.: H04B 10/08, H04J 9/00, H04L 27/34

(54) **Verfahren zur Übertragung eines niederratigen Zusatzkanals in hochratigen kohärent-optischen Übertragungssystemen**
Method for transmitting a low-rate additional channel in high-rate coherent optical transmission systems
Méthode de transmission d'un canal additionnel à bas débit dans des systèmes cohérents optiques de transmission à haut débit

(30) Priorität: 05.10.1996 CH 2414/96
(43) Veröffentlichungstag der Anmeldung: 08.04.1998
(73) Patentinhaber: Oerlikon Contraves AG, 8050 Zürich (CH)
(72) Erfinder: Czichy, Reinhard Hanno, Dr. sc., 9034 Eggersriet (CH); Wandernoth, Bernhard, Dr. Ing., 9533 Kirchberg (CH)
(74) Vertreter: Hotz, Klaus, Dipl.-El.-Ing./ETH Patentanwalt

(56) Entgegenhaltungen:
- EP-A- 0 298 810
- DE-C- 4 110 138
- WANDERNOTH: "5 Photon/bit low complexity 2 Mbit/s PSK transmission breadboard experiment with homodyne receiver applying synchronization bits and convolutional coding" EUROPEAN CONFERENCE ON OPTICAL COMMUNICATION, Bd. 1, 25. - 29.September 1994, FIRENZE, IT, Seiten 59-62, XP002023288
- DAWSON ET AL: "TAT-8 Supervisory Subsystem" BRITISH TELECOMMUNICATIONS ENGINEERING, Bd. 5, Nr. 2, Juli 1986, LONDON, GB, Seiten 153-157, XP002023289

## Beschreibung

Die Erfindung bezieht sich auf ein Verfahren zur Übertragung eines niederratigen Zusatzkanals in hochratigen kohärent-optischen Übertragungssystemen zur Übertragung zusätzlicher, insbesondere betriebsrelevanter, Daten in einer optischen Nachrichtenverbindung, in der ein Nutzdatenstrom in Form einer phasenmodulierten Laser-Lichtwelle übertragen wird und in den von einem Sender Syncbits (Synchronisationsbits) in den Nutzdatenstrom eingestreut werden.

In Kommunikationsnetzen besteht oftmals die Notwendigkeit, neben den eigentlich zu übertragenden Nachrichten auch diejenigen Informationen zu transportieren, welche beispielsweise zum Aufbau, zur Überwachung und Steuerung einer Verbindung und zur Erfassung verschiedener Betriebsdaten dienen.

So weist ein ISDN-Teilnehmeranschluss neben zwei Nutzkanälen auch einen Dienstkanal auf (A. Kanbuch, A. Körber, ISDN-die Technik, Hüthig 1990). In optischen Übertragungssystemen kann ein zusätzlicher Kanal mit niedriger Übertragungsrate durch die üblichen Multiplexierungstechniken implementiert werden. Zu nennen ist die Multiplexierung verschiedener optischer Wellenlängen auf einem Übertragungspfad, welche durch wellenlängenselektiv wirkende optische Apparate durchgeführt wird, so dass ein getrennter, auf einer besonderen Wellenlänge arbeitender Sender eingesetzt werden kann, dessen Emission gesondert detektiert wird.

Eine Verfeinerung findet dieses Prinzip in der Anwendung des Überlagerungsempfangs in optischen Übertragungssystemen.

Weiterhin besteht die Möglichkeit, durch zeitliche Multiplexierung neben vielen Nutzkanälen auch einen Dienstkanal zu übertragen. Da optische Übertragungssysteme Nutzkanäle mit sehr hohen Datenraten bieten, sind sehr grosse Multiplexer notwendig, um einen niederratigen Datenstrom zu multiplexieren. Deshalb sind Bemühungen unternommen worden, einen Dienstkanal durch besondere Verfahren auf ein vorhandenes Nutzsignal zu modulieren (N. B. Stojanovic et al., Non-uniform delta modulation for coding of the service channel in optical systems, International Journal of Electronics, Vol. 75, No. 4, p. 601-605).

Solche Verfahren haben den Nachteil, dass sie bei steigenden Kanal-Datenraten entweder einen analogen Hilfsträger benötigen oder aber, dass mit aufwendigsten Mitteln -extrem grossen Multiplexern- ein niederratiger Übertragungskanal in den Datenkanal 'eingemultiplext' werden muss.

Es ist daher Aufgabe der vorliegenden Erfindung, die Nachteile des Standes der Technik zu vermeiden und eine zuverlässige Möglichkeit aufzuzeigen, bei kohärent-optischen Übertragungssystemen mit binärer Phasenmodulation (BPSK) niederratige Zusatzinformation zusammen mit Information mit einer sehr hohen Nutzdatenrate auf optischem Weg zu übertragen.

Diese Aufgabe wird gemäss der Erfindung dadurch gelöst, dass in regelmässigen Abständen innerhalb der kontinuierlichen Reihe der in den Nutzdatenstrom eingefügten Syncbits die Phase des zur Übertragung genutzten Lichts nicht den Sollwert der Phase des überlagerten Lichts, sondern ebenfalls einen zur Datenübertragung vorgesehenen Wert annimmt, der als eine Syncbitverletzung interpretiert wird.

Als Vorteil durch das erfindungsgemässe Verfahren ergibt sich, dass über einen bestehenden optischen Übertragungskanal ein Zusatzkanal übertragen werden kann, ohne dass mehr Leistung oder grössere Bandbreite benötigt wird. Ein weiterer Vorteil besteht in der sehr einfachen technischen Implementierung, da keine speziellen und aufwendigen Multiplexierer und Demultiplexierer verwendet werden müssen. Schliesslich kann durch sehr einfache Massnahmen im Zusatzkanal eine sehr geringe Bitfehlerwahrscheinlichkeit erreicht werden.

Weitere Einzelheiten, Merkmale und Vorteile der Erfindung ergeben sich nicht nur aus den Ansprüchen und diesen zu entnehmenden Merkmalen -für sich und/oder in Kombination-, sondern auch aus der nachfolgenden Beschreibung der bevorzugten Ausführungsbeispiele.
Es zeigen:
- **Fig. 1**: Eine Darstellung des Sendeschemas im Phasenkreis
- **Fig. 2**: Ein Sendeschema bei Übertragung von Syncbits
- **Fig. 3**: Die Übertragung in einem Zusatzkanal mittels Syncbitverletzungen
- **Fig. 4**: Ein Schema für Syncbitverletzungen für logische 1 und 0
- **Fig. 5**: Ein Beispiel für ein mögliches Rahmenschema für die Übertragung eines Zusatzkanal

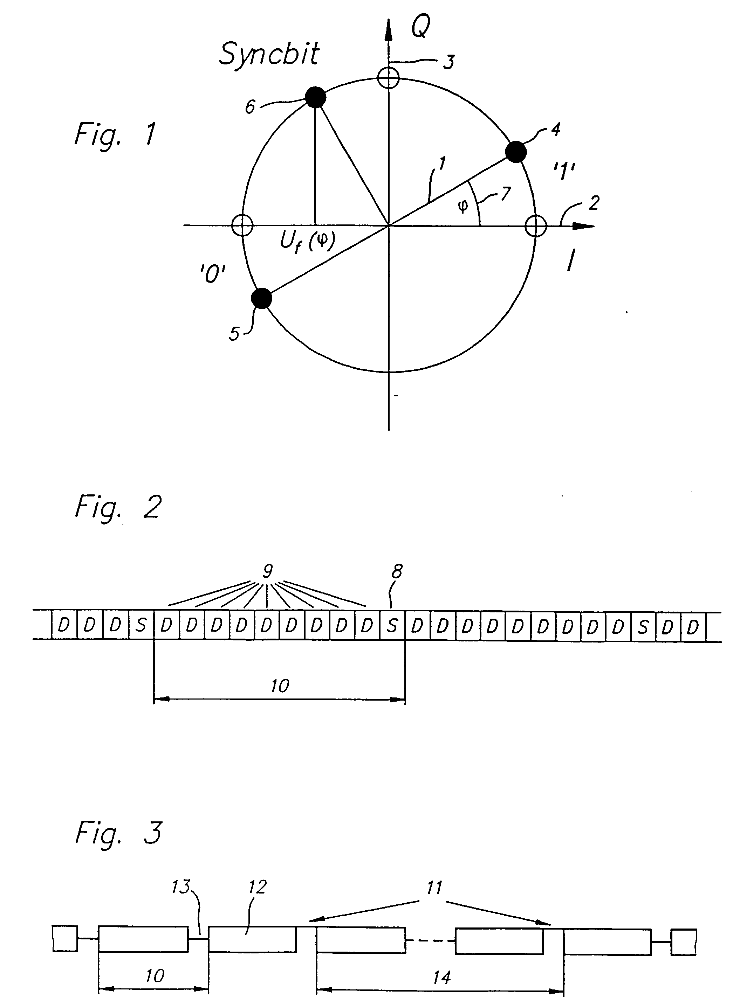

**Fig.1** zeigt eine schematisch Darstellung des Winkels der Phase zwischen zur Datenübertragung gesendetem Licht und überlagertem Licht. Ein zur Darstellung der Signalzustände verwendeter Zeiger **1** kann in einem rechtwinkligen Koordinatensystem aus einem Inphase-Anteil **2** sowie einem Quadratur-Anteil **3** zusammengesetzt werden. Das detektierte Signal ergibt sich aus dem Inphase-Anteil **2** der möglichen Zustände **4** und **5** des Phasenwinkels zwischen Signallicht und überlagertem Licht. Ein dritter in der **Fig. 1** dargestellter Zustand **6** des Zeigers **1** ist dem in den Datenstrom eingefügten Syncbit zuzuordnen. Wie aus **Fig. 1** zu entnehmen, entspricht der detektierte Inphase-Anteil **2** des Signalzustandes **6** dem Fehler des auf einen Phasenunterschied **7** von null abzugleichenden Winkels der Phase zwischen Signallicht und überlagertem Licht.

**Fig. 2** zeigt eine schematische Darstellung der Einbettung der kontinuierlichen Folge von Syncbits **8** in eine Folge von Datenbits **9**. Die zwischen zwei aufeinander folgenden Syncbits auftretenden Datenbits **9** werden zusammen mit dem nachfolgenden Syncbit zu einem Rahmen **10** zusammengefasst.

**Fig 3** verdeutlicht die Übertragung eines niedrigratigen Zusatzkanals mittels Syncbitverletzungen **11** innerhalb von kontinuierlich zwischen Nutzdatenbits **12** eingestreuten Syncbits **13.** Innerhalb des Zusatzkanals existiert ein Bitabstand **14**, der dem Abstand der Syncbitverletzungen **11** entspricht.

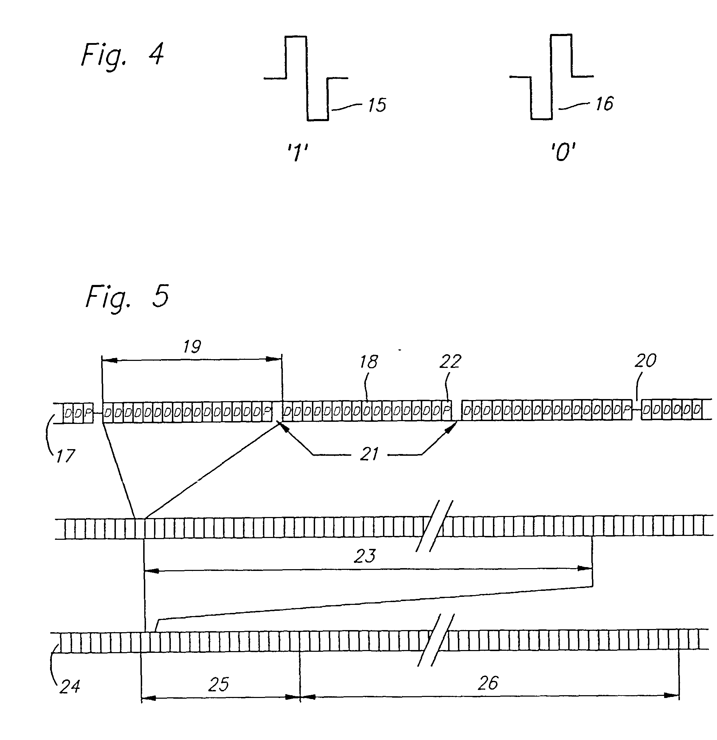

**Fig. 4** stellt ein Beispiel zur Übertragung zweier logischer Zustände mit mehreren aufeinanderfolgenden Syncbitverletzungen dar. Ein logische Zustand "1" **15** unterscheidet sich von einem Zustand "0" **16** durch die Reihenfolge der Polarität der in zwei unmittelbar aufeinanderfolgenden Syncbits codierten Signalpegel.

In **Fig. 5** ist ein mögliches erfindungsgemässes Rahmenschema für die Übertragung in einem Zusatzkanal dargestellt. Der Nutzerkanal **17** weist aus einzelnen Datenbits **18** bestehende Rahmen **19** auf, in welchen statt an deren Ende angefügten Syncbits **20** Zusatzkanal Bits **21** vorhanden sein können. Die notwendige Strukturierung des Nutzdatenflusses in Rahmen kann durch Einfügung von Paritäts Bits **22** zur Reduktion der Wahrscheinlichkeit unentdeckter Übertragungsfehler genutzt werden. Die Datenrate des Zusatzkanals ergibt sich aus der Anzahl der Rahmen N **23** zwischen zwei Zusatzkanalbits **21**. Ein Zusatzkanal **24** kann schliesslich eine eigene Rahmenstruktur, bestehend aus Synchronisationskopf und Codesequenz **25** haben.

Das erfindungsgemässe Verfahren dient damit zur niedrigratigen Übermittlung von Daten in einem gesonderten Kanal innerhalb eines hochratigen, optischen Homodyn-Übertragungssystems mittels Modulation der Phase des als Träger verwendeten Laserlichts. Im Empfänger eines optischen Homodyn-Übertragungssystems wird das durch Modulation der Phase zur Übertragung verwendete Licht mit dem Licht eines weiteren Lasers überlagert und auf einen Photodetektor geführt. Sofern die optische Frequenz des überlagernden Lichts mit der des Signallichts exakt übereinstimmt, entspricht der im Detektor erzeugte Photostrom dem übertragenen Datensignal. Hierzu ist es günstig, wenn die Phase zwischen Signallicht und überlagerndem Licht je nach logischem Zustand des zu detektierenden Signals +90° oder -90° beträgt. Hierzu muss die Phase des überlagernden Lichts dem Signallicht nachgeführt werden.

Dafür sind mehrere Vorrichtungen und Verfahren mit für optische Übertragungssysteme spezifischen Nachteilen bekannt, wie das Restträgerverfahren und der Costas-Loop.

In der ***DE-PS 41 10 138 C1*** wird das sogenannte Syncbit-Verfahren als ein weiterer Weg beschrieben, um die Phase des überlagernden Lichts an derjenigen des Signallichts auszurichten. Hierzu wird in regelmässigen Zeitabständen für die Dauer eines Datenbits das Licht des optischen Senders auf den Phasenmittelwert zwischen der Datenphase (±90°) eingestellt. Für kleine Abweichungen der Phase des überlagernden Lichts im Empfänger ist der im Detektor erzeugte Photostrom in den Syncbits ungefähr proportional zur Phasendifferenz. Das hierdurch gewonnene Fehlersignal kann zur Nachregelung verwendet werden. Der notwendige Abstand einzelner Syncbits zueinander ist durch die Phasenstabilität beider Lasersysteme bestimmt. In der Regel wird jedes neunte bis dreiunddreisigste Datenbit durch ein Syncbit ersetzt, womit der theoretisch maximal mögliche Abstand zwischen zwei Syncbits meistens nicht erreicht wird.

Das erfindungsgemässe Verfahren beinhaltet also die Nutzung eines geringen Teils der regelmässig eingefügten Syncbits zur niedrigratigen Übertragung von Daten. Dies wird dadurch erreicht, dass in regelmässigen Abständen innerhalb der kontinuierlichen Reihe der in den Nutzdatenstrom eingefügten Syncbits die Phase des zur Übertragung genutzten Lichts nicht den Sollwert der Phase des überlagernden Lichts, sondern ebenfalls einen zur Datenübertragung vorgesehenen Wert annimmt. Der Empfänger weist bereits die zur Extraktion der Syncbits notwendigen Merkmale auf und kann mit geringem Aufwand zur Detektion der eingefügten Datenbits nachgerüstet werden. (siehe **Fig. 1 + Fig. 2**)

Anstatt eines Demultiplexers ist damit nur ein Zähler erforderlich zur Erfassung des Abstandes zwischen den in die Reihe der Syncbits eingefügten Datenbits. Da nur ein geringer Teil der Syncbits auf diese Weise verletzt wird, besteht keine wesentliche Beinträchtigung der eigentlichen Funktion dieser Signale, gleichzeitig sinkt die Datenrate des dadurch gewonnenen zusätzlichen Kanals auf im Vergleich zur Nutzdatenrate niedrige Werte. (siehe **Fig. 3**)

Die Datenrate für einen Zusatzkanal ist einfach gegeben durch die Kanaldatenrate geteilt durch die Anzahl der Datenbits zwischen zwei Syncbitverletzungen.

### Beispiel

| | |
|---|---|
| Nettodatenrate | 1 Gbit/s |
| Kanalrahmenlänge | 17 Bit (= 16 Datenbit + 1 SyncBit) |
| gewünschte Zusatzkanaldatenrate | 100 kbit/s |

Die Kanalrahmenfrequenz ist damit 1 GHz/16 Bit = 62,5 MHz, sodass die gewünschte Zusatzkanaldatenrate erreicht wird, wenn jedes 625. Syncbit durch ein Zusatzkanalbit ersetzt wird.

Für die untere Grenze für den Abstand der Syncbitverletzungen ist zum einen das Phasenrauschen des Lasers, der für die Übertragung verwendet wird, und zum anderen die Struktur des Rahmensynchronisierers massgebend. Simulationen haben gezeigt, dass die Systemeigenschaften noch bis hinunter zu einem Abstand von 10 Rahmen zwischen zwei Zusatzkanalbits nahezu unverändert bleiben.

Allerdings kann die Verletzung eines Syncbits nicht mit der gleichen Sicherheit detektiert werden wie zwischen den beiden zur Übertragung der Nutzdaten verwendeten Signalpegel entschieden werden kann, da der Unterschied des Photostroms halbiert ist. Um eine sichere Synchronisation auf die Syncbitverletzungen (= Zusatzkanalbits) zu gewährleisten, erweist es sich als vorteilhaft, das einzelne im zusätzlichen Kanal zu übertragene Bit durch mehrere aufeinander folgende Signale, d.h., Syncbitverletzungen, zu codieren. Eine gerade Anzahl aufeinander folgender alternierender Signalpegel gewährleistet hierbei ein mittelwertfreies Signal, wodurch ein nachteiliger Einfluss des Zusatzkanals auf die Nachführung der Phase des überlagernden Lichts vermieden wird.

Interessant ist dabei, dass der Signal-Störabstand für die SyncBits um 6 dB kleiner ist als für die Datenbits. Um eine sichere Synchronisation auf die Syncbitverletzungen zu gewährleisten, ist es vorteilhaft, dass ein Zusatzkanalbit nicht nur durch eine einfache Syncbitverletzung, sondern durch zwei oder mehr direkt aufeinanderfolgende Syncbitverletzungen repräsentiert wird. Der Wert des Zusatzkanalbits ist dabei durch den Wert der ersten Syncbitverletzung gegeben.

Besonders vorteilhaft ist eine gerade Anzahl aufeinanderfolgender alternierender Syncbitverletzungen (siehe ***Fig. 4****),* da dadurch Mittelwertfreiheit unabhägig von den Zusatzkanaldaten erzielt wird. Simulationen haben gezeigt, dass in der Regel zwei aufeinanderfolgende Syncbitverletzungen völlig ausreichend sind.

Das so ausgeführte Verfahren bietet den zusätzlichen Vorteil, dass die Fehlerwahrscheinlichkeit für den Zusatzdatenkanal gegenüber dem Nutzdatenkanal verbessert werden kann, wenn der entsprechende Datenentscheider Informationen über die 'Stärke' eines Bits (Soft-Decision) zur Verfügung stellt. In diesem Fall können die Soft-Decision-Werte der aufeinanderfolgenden Syncbitverletzungen (Polarität berichtigt) vor der Bitentscheidung addiert werden. Bei jeder Verdopplung der Anzahl der Syncbitverletzungen pro Zusatzkanalbit ergibt sich eine Signal-Stör-Abstandverbesserung von 3 dB.

## Patentansprüche

1. Verfahren zur Übertragung eines niederratigen Zusatzkanals (**24**) in hochratigen kohärent-optischen Übertragungssystemen zur Übertragung zusätzlicher, insbesondere betriebsrelevanter, Daten in einer optischen Nachrichtenverbindung, in der ein Nutzdatenstrom (**17**) in Form einer phasenmodulierten Laser-Lichtwelle übertragen wird und in den von einem Sender Syncbits (Synchronisationsbits) in den Nutzdatenstrom (**17**) eingestreut werden,
**dadurch gekennzeichnet, dass**
in regelmässigen Abständen innerhalb der kontinuierlichen Reihe der in den Nutzdatenstrom eingefügten Syncbits (**20**) die Phase des zur Übertragung genutzten Lichts nicht den Sollwert der Phase des überlagerten Lichts, sondern ebenfalls einen zur Datenübertragung vorgesehenen Wert annimmt, der als eine Syncbitverletzung (**11**) interpretiert wird.

2. Verfahren zur Übertragung eines Zusatzkanals nach Anspruch **1**,
**dadurch gekennzeichnet, dass**
die Snycbitverletzungen (**11**) zur Übertragung von Zusatzkanalbits (**21**) genutzt werden

3. Verfahren zur Übertragung eines Zusatzkanals nach Anspruch **2**,
**dadurch gekennzeichnet, dass**
jedes Zusatzkanalbit (**21**) durch mehrere, vorzugsweise zwei, aufeinanderfolgende Syncbitverletzungen (**11**) codiert wird.

4. Verfahren zur Übertragung eines Zusatzkanals nach Anspruch **2** oder **3**,
**dadurch gekennzeichnet, dass**
die aufeinanderfolgenden und ein Zusatzkanalbit (**21**) repräsentierenden Syncbitverletzungen (**11**) alternierend ausgebildet sind.

5. Verfahren zur Übertragung eines Zusatzkanals nach einem der vorangehenden Ansprüche,
**dadurch gekennzeichnet, dass**
zur Verringerung der Bitfehlerwahrscheinlichkeit auf dem Zusatzkanal (**24**) die Analogwerte (Soft Decision) der ein Zusatzkanalbit (**21**) repräsentierenden aufeinanderfolgenden Syncbitverletzungen (**11**) vor der Bitentscheidung polaritäts-korrigiert addiert werden.

6. Verfahren zur Übertragung eines Zusatzkanals nach einem der vorangehenden Ansprüche,
**dadurch gekennzeichnet, dass**
der Zusatzkanal (**24**) eine eigene, vom Nutzdatenstrom (**17**) verschiedene, Rahmenstruktur aufweist.

## Claims

1. Method for transmitting a low-bit-rate additional channel (24) in high-bit-rate coherent optical transmission systems for transmitting auxiliary, in particular operationally relevant, data in an optical communications link in which a wanted data stream (17) is transmitted in the form of a phase modulated laser light wave and a transmitter strews syncbits (synchronisation bits) into the wanted data stream (17),
characterised in that
at regular intervals within the continuous series of syncbits (20) inserted into the wanted data stream, the phase of the light utilised for transmission does not assume the nominal value of the phase of the superimposed light, but likewise a value provided for data transmission, which is interpreted as a syncbit violation (11).

2. Method for transmitting an additional channel according to claim 1,
characterised in that
the syncbit violations (11) are utilised for transmitting redundant channel bits (21).

3. Method for transmitting an additional channel according to claim 2,
characterised in that
each redundant channel bit (21) is coded by a plurality of successive syncbit violations (11), preferably two.

4. Method for transmitting an additional channel according to claim 2 or 3,
characterised in that
the successive syncbit violations (11), representing a redundant channel bit (21), are configured so as to alternate.

5. Method for transmitting an additional channel according to any of the preceding claims,
characterised in that
to reduce the bit error rate on the additional channel (24) the analogue values (soft decision) of the successive syncbit violations (11) representing a redundant channel bit (21) are polarity-corrected and added prior to the bit decision.

6. Method for transmitting an additional channel according to any of the preceding claims,
characterised in that
the additional channel (24) has an inherent frame structure that is different from the wanted data stream (17).

## Revendications

1. Procédé pour transmettre un canal supplémentaire à faible débit (24) dans des systèmes de transmission en optique cohérente à débit élevé pour la transmission de données supplémentaires, notamment importantes du point de vue du fonctionnement, dans une liaison optique de transmission d'informations, dans laquelle un flux de données utiles (17) est transmis sous la forme d'une onde de lumière laser modulée en phase, et dans lequel des bits de synchronisation sont dispersés par un émetteur dans le flux de données utiles (17),
caractérisé en ce que
à des intervalles réguliers à l'intérieur de la série continue des bits de synchronisation (20) insérés dans le flux de données utiles, la phase de la lumière utilisée pour la transmission ne prend pas la valeur de consigne de la phase de la lumière superposée, mais une valeur prévue pour la transmission de données et qui est interprétée comme une violation (11) des bits de synchronisation.

2. Procédé pour la transmission d'un canal supplémentaire selon la revendication 1, caractérisé en ce que
les violations (11) des bits de synchronisation sont utilisées pour la transmission de bits (21) du canal supplémentaire.

3. Procédé pour la transmission d'un canal supplémentaire selon la revendication 2, caractérisé en ce que
chaque bit (21) du canal supplémentaire est codé au moyen de plusieurs, de préférence deux, violations successives (11) des bits de synchronisation.

4. Procédé pour la transmission d'un canal supplémentaire selon la revendication 2 ou 3, caractérisé en ce que
les violations successives (11) des bits de synchronisation qui représentent un bit (21) du canal supplémentaire, sont réalisées d'une manière alternée.

5. Procédé pour la transmission d'un canal supplémentaire selon l'une des revendications précédentes, caractérisé en ce que
pour réduire la probabilité d'erreurs sur les bits du canal supplémentaire (24), les valeurs analogiques (soft decision) des violations successives (11) des bits de synchronisation, qui représentent un bit (21) du canal supplémentaire, sont additionnées, avec correction de la polarité, avant la décision concernant les bits.

6. Procédé pour la transmission d'un canal supplémentaire selon l'une des revendications précédentes,
caractérisé en ce que
le canal supplémentaire (24) comporte une structure de trame propre, différente du flux de données utiles (17).
